**Europäisches Patentamt**

(19) **European Patent Office**

**Office européen des brevets**

(11) Publication number: **0 216 939**

**B1**

(12) # EUROPEAN PATENT SPECIFICATION

(45) Date of publication of patent specification: **08.08.90**

(21) Application number: **86902034.7**

(22) Date of filing: **28.03.86**

(86) International application number:
**PCT/JP86/00154**

(87) International publication number:
**WO 86/05741 09.10.86 Gazette 86/22**

(51) Int. Cl.⁵: **B 29 C 45/50, B 29 C 45/17, B 29 C 45/76**

(54) **INJECTION MOLDING MACHINE WITH GRAPHICS DISPLAY OF METERING CONDITIONS.**

(30) Priority: **28.03.85 JP 62141/85**

(43) Date of publication of application:
**08.04.87 Bulletin 87/15**

(45) Publication of the grant of the patent:
**08.08.90 Bulletin 90/32**

(84) Designated Contracting States:
**DE FR GB**

(56) References cited:
**EP-A-0 128 722    JP-A-60 174 623**
**GB-A-2 019 608    JP-U-5 661 319**
**JP-A-59 224 324**

**KUNSTSTOFFE, vol. 63, no. 8, August 1973, pages 497-500; P. HEMMI et al.: "Steuern, Regeln und Programmieren von Spritzgiessmaschinen"**

**JAPAN PLASTICS AGE, vol. 23, no. 201, January/February 1985, pages 35-41, Tokyo, JP; H. BANZAI: "High performance process controller - new injectvisor for injection molding machine"**

(73) Proprietor: **FANUC LTD**
**3580, Shibokusa Aza-Komanba Oshino-mura Minamitsuru-gun Yamanashi 401-05 (JP)**

(72) Inventor: **NEKO, Noriaki**
**3-27, Tamadaira Hino-shi**
**Tokyo 191 (JP)**

(74) Representative: **Billington, Lawrence Emlyn et al**
**HASELTINE LAKE & CO Hazlitt House 28 Southampton Buildings Chancery Lane London WC2A 1AT (GB)**

**Description**

The present invention relates to an injection molding machine and, more particularly, to graphical display of metering conditions in the injection molding machine.

In typical conventional injection molding machines, metering conditions are set by a switch, and these conditions are displayed upon operation of this switch. Japanese Patent Application No. 59—24701 describes an injection molding machine which numerically displays various set conditions of the injection molding machine using a display device.

EP—A—0 128 722, upon which the preamble of claim 1 is based, discloses a method of supervising injection molding by use of a waveform of internal die pressure. In this method, the internal die pressure of flowing resin is measured and displayed on a screen as a continuous waveform. A reference waveform can also be displayed for comparison purposes.

According to the present invention, there is provided an injection molding machine comprising a display means, and graphic display control means for displaying on said display means a graph of a variable associated with an injection molding process;
characterised by:
setting means for setting the number of switching stages, and back pressures, screw rotating speeds, and screw switching positions for the respective stages in a metering process of said injection molding process;
set value memory means for storing preset values set by said setting means;
said control means further having the function of a discriminating means for discriminating maximum values of the back pressures, the screw rotating speeds, and the screw switching positions which have been set and stored; and
said control means further having the function of a scale factor calculating means for calculating scale factors with respect to the back pressures, the screw rotating speeds, and the screw switching positions in order to perform scale conversion for graphs in accordance with the corresponding maximum values; and wherein
said graphic display control means are operated to display on said display means, in the form of graphs, the relationship between the screw switching positions and the back pressures and the relationship between the screw switching positions and the screw rotating speeds in accordance with the back pressures, the screw rotating speeds, and the screw switching positions for the respective stages, and the scale factors corresponding thereto, whereby setting errors can be readily detected.

Reference is made, by way of example, to the accompanying drawings in which:

Fig. 1 is a schematic block diagram showing an injection molding machine comprising a graphic display function according to an embodiment of the present invention;

Fig. 2 shows a metering condition display on a CRT screen in Flg. 1; and

Fig. 3 is a control flow chart for graphic display executed by a computer in Fig. 1.

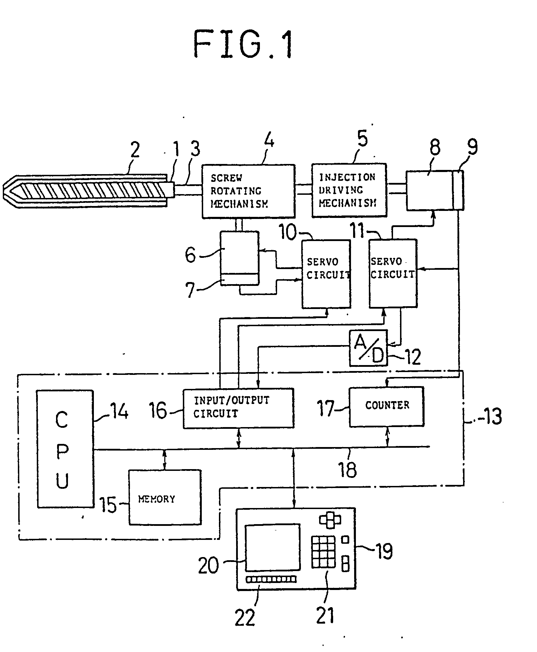

In Fig. 1, reference numeral 1 denotes a screw in the injection molding machine; 2, a heating cylinder; 3, a screw shaft coupled to the screw 1; 4, a screw rotating mechanism driven by a servo motor 6 to rotate the screw 1; 5, an injection driving mechanism driven by servo motor 8 to drive the screw 1 in its axial direction, thus causing the screw 1 to perform injection; and 10, a servo cicuit for executing speed control of the servo motor 6 in accordance with a signal from an incremental type encoder 7 and an instruction from a controller 13. Reference numeral 11 denotes a servo circuit which controls the servo motor 8. The servo circuit 11 controls the rotating speed and rotating position of the servo motor 8 upon reception of an instruction from the controller 13 (to be described later), thereby controlling the axial moving speed (injection speed) and the axial position of the screw 1. Note that reference numeral 9 denotes an incremental type encoder, whose output is connected to the servo circuit 11 to control the rotating speed and position of the screw. The output of the encoder 9 is also connected to a counter 17 of the controller 13, and a current position of the screw 1 can be detected by the counter 17. Reference numeral 12 denotes an analog-to-digital converter (to be referred to as an A/D converter hereinafter). The A/D converter 12 receives a signal from a current detector (not shown), which is arranged in the servo circuit 11 to detect a driving current of the servo motor 8, and converts it into a digital signal to output it to the controller 13. The controller 13 controls a back pressure applied to the screw 1 during a metering process by means of a driving current of the servo motor 8.

The controller 13 comprises an NC device incorporating a microcomputer. Reference numeral 14 denotes a microcomputer (to be referred to as a CPU hereinafter) in the controller; 16, an input/output circuit, which is connected to the servo circuits 10 and 11 and the A/D converter 12 so as to be able to output a signal to the servo circuits 10 and 11 and to receive a signal from the A/D converter 12. The counter 17 counts signals from the encoder 9 arranged in the servo motor 8 to detect the position of the screw 1. A memory 15 comprises a ROM for storing a control program for controlling an injection molding machine, a RAM for temporarily storing data, a nonvolatile memory for storing set values of various metering conditions, and the like. Reference numeral 19 denotes a control with a display (to be referred to as MDi & CRT hereinafter). Varous instructions are input from a keyboard 21 on the MDi & CRT 19, a setting screen of various conditions is displayed on a CRT screen 20 using soft keys 22, and various conditions are set using the keyboard 21.

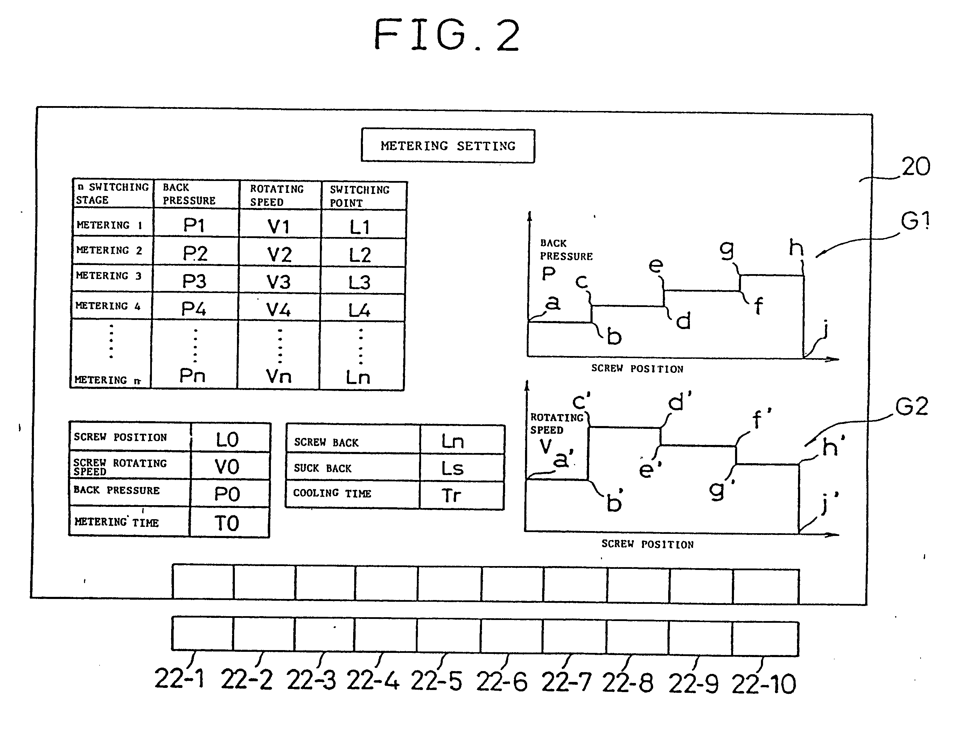

FIG. 2 shows the setting screen of the metering conditions displayed on the CRT screen 20 upon operation of the soft keys 22. Upon setting of the metering conditions, after the screen is displayed, the number of switching stages, and back pressures P1 to Pn, screw rotating speeds V1 to Vn, and positions L1 to Ln of the screw 1 as switching points for the metering condition in stages 1 to $n$ are set using the keyboard 21; and a screw back Ln as a final switching point, a suck back Ls, and cooling time Tr are also set. In FIG. 2, reference symbols LO, VO, PO, and TO indicate a current screw position, screw rotating speed, back pressure, and metering time, respectively. After the number of switching stages, and the back pressures, rotating speeds, and switching points for the respective stages are set, coordinate axes of two orthogonal coordinate systems for two graphs G1 and G2 are displayed at predetermined positions on the CRT screen 20. Then, as will be described later, the graph G1 in which a screw position L is plotted along the X axis and a back pressure P is plotted along the Y axis, and the graph G2 wherein the screw position L is plotted along the X axis and a rotating speed V is plotted along the Y axis are displayed.

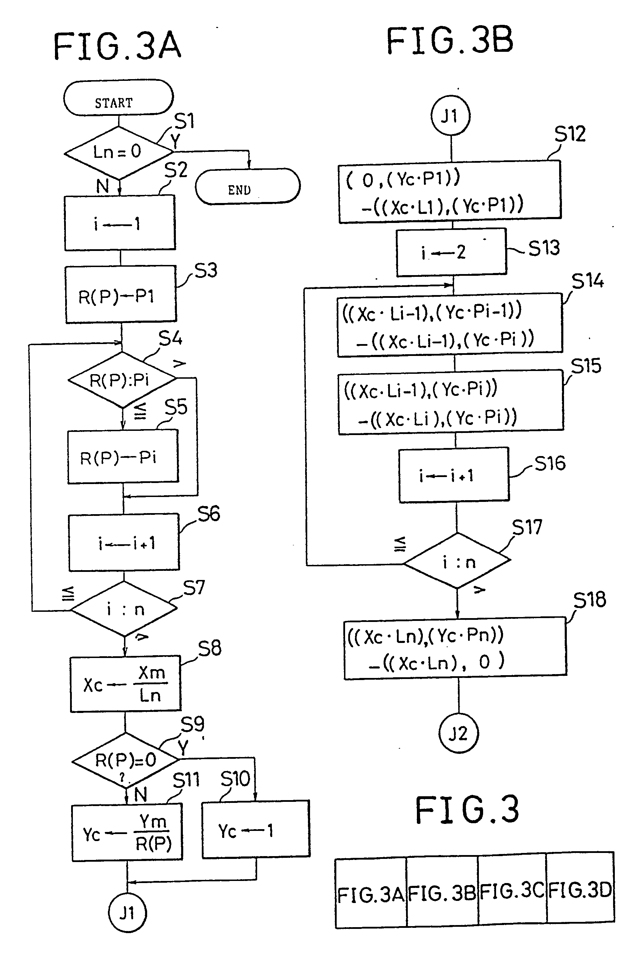

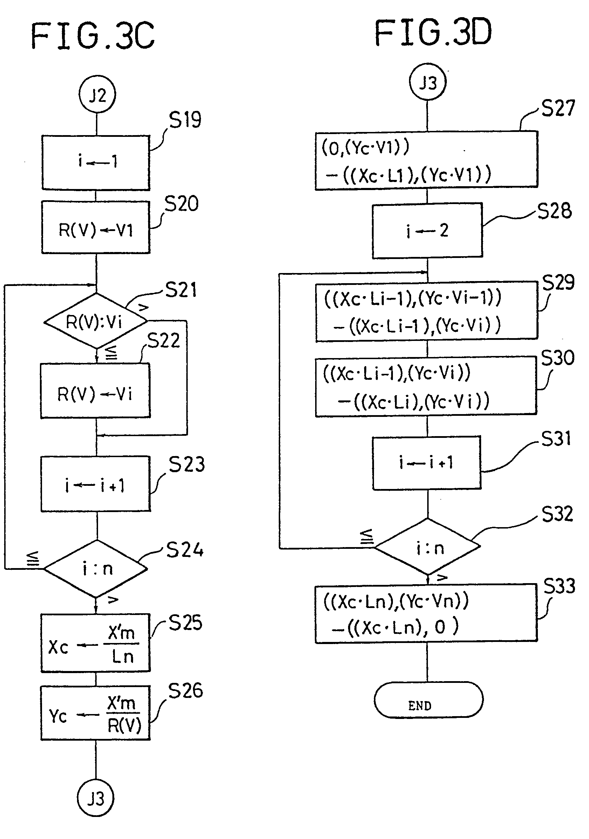

The operation of the graph display apparatus of this embodiment will be described with reference to the operation flow chart shown in FIG. 3.

First, an operator operates a predetermined one of the soft keys 22—1 to 22—10 (FIG. 2) to select the metering condition setting screen. The operator sets the number of switching stages, and the back pressures, screw rotating speeds, and screw positions as the switching points for the respective stages using cursor keys and ten keys of the keyboard 21. When these values are stored in the memory 15, the CPU 14 begins to draw the graphs G1 and G2 shown in FIG. 2. In order to display these graphs, as shown in FIG. 3A, the CPU 14 as the discriminating means judges if the screw back Ln (appendix $n$ indicates a preset switching stage numer, and in the graphs G1 and G2 shown in FIG. 2, n = 4) is "0" (step S1). If it is determined that the screw back Ln as the final switching point is "0", this means that no preset values are set. Therefore, no graph display operation is performed. If the screw back Ln is not "0", an index $i$ is set to "1" (step S2), a preset back pressure P1 of the first stage is set in a register R(P) (step S3), and the value in the register R(P) is then compared with a preset back pressure Pi of an ith stage (step S4). If the preset back pressure Pi is equal to or larger than the value in the register R(P), the preset back pressure Pi is set in the register R(P) (step S5). (Note that, since i = 1 at the beginning and the value P1 is set in the register R(P), the preset back pressure Pi is equal to the value P1 in the register R(P) compared therewith, thus setting the value P1 in the register R(P).) If the value in the register R(P) is larger than the preset back pressure Pi of the ith stage, the value of the register R(P) is not altered, and the flow advances to step S6. In step S6, the index $i$ is incremented by "1", and it is checked if the index $i$ exceeds the preset number of stages $n$ (step S7). Thus, steps S4 to S7 are repeated until the index $i$

exceeds the number $n$. When the index $i$ exceeds the preset number of stages $n$, the maximum preset back pressure for each stage is stored in the register R(P).

The CPU 14 as a scale factor calculating means divides a maximum length Xm of the X axis of the graph G1 on the CRT screen 20 with the preset screw back Ln, thereby calculating a scale factor Xc of the X axis (step S8). More specifically, the scale factor Xc for converting the position of the screw 1 onto a position along the X axis is calculated so that the position of the switching point Ln of the final stage corresponding to the screw back Ln coincides with the maximum point Xm of the X axis of the graph G1. Next, it is checked if the register R(P) is "0" (step S9). Since the register R(P) stores the maximum value of the back pressures P1 to Pn set during processing of steps S4 to S7, the value of the register R(P) = 0 means that all the back pressures P1 to Pn are "0". At this time, a scale factor Yc for the Y axis is set to be an appropriate value, e.g., "1" (step S10). If the value of the register R(P) is not "0", a maximum length Ym of the graph G1 is divided with the value of the register R(P) for storing the maximum back pressure, thus calculating the scale factor Yc for the Y axis (step S11).

The CPU 14 as a graphic display control means multiplies the back pressure P1 of the first stage with the scale factor Yc for the Y axis to calcualte the Y coordinate on the graph G1 with respect to the preset back pressure P1, and then calculates a point $a$ at a coordinate position (0, Yc × P1) on the graph G1. Next, the CPU 14 multiplies the preset switching point L1 of the first stage with the scale factor Xc for the X axis to calculate the X coordinate on the graph G1 corresponding to a position L1 of the screw 1 indicating completion of the first stage, and then calculates a point $b$ at a coordinate position {(Xc × L1), (Yx × P1)} on the graph G1. Then, the CPU 14 connects the points $a$ and $b$ with a line and displays same (step S12). Thereafter, the index $i$ is set to "2" (step S13). The CPU 14 multiplies a preset switching point Li − 1, i.e., the set switching point L1 of the first stage with the scale factor Xc for the X axis to calculate the X coordinate of the end point of the first stage. The CPU 14 multiplies a preset back pressure Pi − 1, i.e., the set back pressure P1 of the first stage with the scale factor Yc for the Y axis to calculate the Y coordinate of the end point of the first stage. From the X and Y coordinates thus obtained, the CPU 14 calculates a point $b$ at a coordinate position

$$\{(Xc \cdot Li - 1), (Yc \cdot Pi - 1)\} = \{(Xc \cdot L1), (Yc \cdot P1)\}.$$

Then, the CPU 14 multiplies the preset back pressure Pi, i.e., the preset back pressure P2 of the second stage with the scale factor Yc to obtain the Y coordinate position (Yc · Pi) = (Yc · P2) of the starting point of the second stage. The CPU 14 thus calculates a point $c$ at a coordinate position

$$\{(Xc \cdot Li - 1), (Yc \cdot Pi)\} = \{(Xc \cdot L1), (Yc \cdot P2)\}$$

from the thus obtained Y coordinate and the X coordinate

$$(Xc \cdot Li - 1) = (Xc \cdot L1)$$

obtained previously. The CPU 14 connects the points $b$ and $c$ with a line and displays it (step S14). Next, the CPU 14 connects a coordinate position

$$\{(Xc \cdot Li - 1), (Yc \cdot Pi)\} = \{(Xc \cdot L1), (Yc \cdot P2)\}$$

of the point $c$ and a point $d$ as the end position of the second stage, and displays them (step S15). More specifically, the point $c$ has been calculated in step S14, and the Y coordinate $(Yc \cdot Pi)$ of the point $d$ has already been calculated. Therefore, the X coordinate of the point $d$, i.e., the X coordinate of the end point of the second stage is then calculated by multiplying the set switching point $Li = L2$ with the scale factor Xc for the X axis. As a result, the coordinate position

$$\{(Xc \cdot Li - 1), (Yc \cdot Pi)\} = \{(Xc \cdot L2), (Yc \cdot P2)\}$$

of the point $d$ and the coordinate position

$$\{(Xc \cdot Li - 1), (Yc \cdot Pi)\} = \{(Xc \cdot L1), (Yc \cdot P2)\}$$

of the point $c$ are connected with a line and are displayed (step S15).

The index $i$ is incremented by "1" (step S16), and it is checked if the index $i$ has reached the preset number of stages $n$ (step S17). Steps S14 to S17 are executed until the index $i$ exceeds the preset number of stages $n$. More specifically, if the index $i$ is "3", the line connecting points $d$ and $e$ is displayed in step S14, and the line connecting points $e$ and $f$ is displayed in step S15. If the index $i$ is updated to "4", the line connecting points $f$ and $g$ is displayed in step S14, and the line connecting points $g$ and $h$ is displayed in step S15. In the case of the graph G1, the back pressure P1 and the switching point L1 of the first stage are represented by the points $a$ and $b$, the back pressure P2 and the switching point L2 of the second stage are represented by the points $c$ and $d$, the back pressure P3 and the switching point L3 of the third stage are represented by the points $e$ and $f$, and the back pressure and the switching point of the fourth stage are represented by the points $g$ and $h$. When the index $i$ exceeds $n$ ($= 4$), the previously obtained coordinate point

$$\{(Xc \cdot Ln), (Yc \cdot Pn)\} = \{(Xc \cdot L4), (Yc \cdot P4)\}$$

of the point $h$ and the coordinate point

$$\{(Xc \cdot Ln), 0\} = \{(Xc \cdot L4), 0\}$$

of a point $j$ are connected and displayed (step S18), thus completing display of the graph G1 for the screw L and the back pressure P.

Upon completion of display of the graph G1, as shown in FIG. 3C, the index $i$ is again set to "1" (step S19), thus starting processing for displaying the graph G2 representing the relationship between the screw position L and the screw rotating speed. First, a preset rotating speed V1 of the first stage is set in a register R(V), and the same processing as in steps S4 to S7 in FIG. 3A is executed to detect the maximum value of the preset rotating speed V and to store it in the register R(V). More specifically, the value of the register R(V) is compared with a preset rotating speed Vi of an ith stage indicated by the index $i$ (step S21). If the preset rotating speed Vi of the ith stage is larger than the value in the register R(V), it is stored in the register R(V) (step S22), the index $i$ is incremented by "1" (step S23), and steps S21 to S24 are repeated until the index $i$ reaches the preset number of stages $n$ ($= 4$) (step S24).

A maximum length X'm of the X axis of the graph G2 is divided with a switching point Ln ($= L4$) of the final stage $n$ ($= 4$) corresponding to the screw back to calculate the scale factor Xc for the X axis (step S25). Similarly, a maximum length Y'm of the Y axis of the graph G2 is divided with the value of the register R(V) storing the maximum rotating speed to calculate the scale factor Yc for the Y axis (step S26). Then, processing steps S27 to S33 similar to steps S12 to S18 executed in the graph display processing for the graph G1 are executed in accordance with the scale factors Xc and Yc, the preset rotating speeds V1 to Vn ($= V4$), and the preset screw switching positions L1 to Ln ($= L4$), thus displaying the graph G2.

More specifically, a coordinate position $\{(0, Yc \cdot V1)\}$ of a point a' and a coordinate position $\{((Xc \cdot L1), (Yc \cdot V1)\}$ of a point b' are connected and displayed (step S27) to display the screw rotating speed V1 of the first stage and the switching point L1 to the second stage. The index $i$ is updated to "2" (step S29), and a coordinate position

$$\{(Xc \cdot Li - 1), (Yc \cdot Vi - 1)\} = \{(Xc \cdot L1), (Yc \cdot V1)\}$$

of the point b' and a coordinate position

$$\{(Xc \cdot Li - 1), (Yc \cdot Vi)\} = \{(Xc \cdot L1), (Yc \cdot V2)\}$$

of a point c' are connected and displayed (step S29). A coordinate position $\{(Xc \cdot L1), (Yc \cdot V2)\}$ of the point c' and a coordinate position

$$\{(Xc \cdot Li), (Yc \cdot Vi)\} = \{(Xc \cdot L2), (Yc \cdot V2)\}$$

of a point d' are connected and displayed (step S30). Then, after the index $i$ is incremented by "1" (step S31), similar processing (steps S29 and S30) is repeated to sequentially connect and display points d', e', f', g', and h'. When the index $i$ exceeds the preset number of stages $n$ ($= 4$) (step S32), the point h'

$$\{(Xc \cdot Ln), (Yc \cdot Vn)\} = \{(Xc \cdot L4), (Yc \cdot V4)\}$$

and the point j' $\{(Xc \cdot Ln), 0\} = \{(Xc \cdot L4), 0\}$ are connected and displayed (step S33), thus completing the display of the graph G2 representing the relationship between the set screw position and the screw rotating speed.

As a result, in the graph G2, a line connecting points a' to b' represents the set screw rotating speed V1 of the first stage and the switching position L1 to the second stage, a line connecting the points c' and d' represents the rotating speed V2 and the switching point L2 of the second stage, a line connecting the points e' and f' represents the rotating speed V3 and the switching point L3 of the third stage, and a line connecting the points g' and h' represents the preset screw rotating speed V4 and the switching screw position L4 of the fourth stage.

The set number of stages, and the back pressures, screw rotating speeds and the screw switching positions to the next stages for the respective stages in the metering process are displayed by means of the graphs G1 and G2, and the set conditions are displayed by the graphs, thus allowing easy detection of setting errors.

In the above embodiment, the metering conditions are displayed by the two graphs G1 and G2. However, back pressures and screw rotating speeds can be displayed on a single graph. In this case, the back pressures and the screw rotating speeds can be displayed in color using a color display, thus allowing still clearer display.

## Claims

1. An injection molding machine comprising a display means (20), and graphic display control means (14) for displaying on said display means a graph of a variable associated with an injection molding process;
characterised by:
setting means (21) for setting the number (n) of switching stages, and back pressures (P), screw rotating speeds (V), and screw switching positions (L) for the respective stages in a metering process of said injection molding process;
set value memory means (15) for storing preset values set by said setting means;
said control means (14) further having the function of a discriminating means for discriminating maximum values of the back pressures (P), the screw rotating speeds (V), and the screw switching positions (L) which have been set and stored; and
said control means (14) further having the function of a scale factor calculating means for calculating scale factors with respect to the back pressures (P), the screw rotating speeds (V), and the screw switching positions (L) in order to perform scale conversion for graphs in accordance with the corresponding maximum values; and wherein
said graphic display control means (14) are operated to display on said display means (20), in the form of graphs (G1, G2), the relationship between the screw switching positions (L) and the back pressures (P) and the relationship between the screw switching positions (L) and the screw rotating speeds (V) in accordance with the back pressures, the screw rotating speeds, and the screw switching positions for the respective stages, and the scale factors corresponding thereto, whereby setting errors can be readily detected.

2. An injection molding machine according to claim 1, wherein said display means (20) comprises a display screen, and said graphic display control means (14) displays the metering conditions on at least one orthogonal coordinate system (G1, G2) displayed on said display screen.

3. An injection molding machine according to claim 2, wherein said scale factor calculating means (14) are operated to:
divide maximum lengths of respective first coordinate axes of first and second orthogonal coordinate systems (G1, G2) to be displayed by the screw switching position (Ln) of the final stage to calculate first and second scale factors, respectively,
divide a maximum length of a second coordinate axis of the first coordinate system (G1) by the discriminated maximum value of the back pressures (P) to calculate a third scale factor, and to
divide a maximum length of a second coordinate axis of the second coordinate system (G2) by the discriminated maximum value of the screw rotating speeds (V) to calculate a fourth scale factor.

4. An injection molding machine according to claim 3, wherein said graphic display control means (14) are operated to:
multiply the screw switching positions (L) for each of the respective stages with the first and second scale factors to calculate coordinate positions of the screw switching positions for each of the respective stages on the respective first axes of the first and second coordinate systems (G1, G2) respectively,
multiply the back pressures (P) for each of the respective stages with the third scale factor to calculate coordinate positions of the back pressures for each of the respective stages on the second coordinate axis of the first coordinate system (G1), and
multiply the screw rotating speeds (V) for each of the respective stages with the fourth scale factor to calculate coordinate positions of the screw rotating speeds for each of the respective stages on the second coordinate axis of the second coordinate system (G2).

5. An injection molding machine according to claim 4, wherein said graphic display control means (14) are operated to effect graphic display such that an "i"th coordinate position on the first coordinate system (G1) determined by the back pressure (Pi) for an "i"th stage is connected by a line with an "i + 1"th coordinate position on the first coordinate system (G1) determined by the back pressure and the screw switching position (Li) for the "i"th stage, and to increment "i" by one and to continue until "i" exceeds the number (n) of switching stages, "i" initially being set to "1".

6. An injection molding machine according to claim 4 or 5, wherein said graphic display control means (14) are operated to effect graphic display such that an "i"th coordinate position on the second coordinate system (G2) determined by the screw rotating speed (Vi) for an "i"th stage is connected by a line with an "i + 1"th coordinate position on the second coordinate system (G2) determined by the screw rotating speed and the screw switching position (Li) for the "i"th stage, and to increment "i" by one and to continue until "i" exceeds the inputted number (n) of switching stages, "i" initially being set to "1".

7. An injection molding machine according to claim 3, 4, 5 or 6, wherein said display means (20) displays the first and second coordinate systems (G1, G2) separately from each other.

8. An injection molding machine according to claim 3, 4, 5 or 6, wherein said display means (20) displays the first and second coordinate systems (G1, G2) superimposed over each other.

**Patentansprüche**

1. Einspritzgießvorrichtung, die ein Anzeigemittel (20) und ein Graphikanzeige-Steuermittel (14) zum Anzeigen einer graphischen Darstellung einer einem Einspritzvorgang zugeordneten Variablen mit Hilfe des Anzeigemittels umfaßt, gekennzeichnet durch

Einstellmittel (21) zum Einstellen der Anzahl (n) von Schaltstufen sowie von Gegendrücken (P), Schneckendrehzahlen (V) und Schneckenschaltpositionen (L) für die betreffenden Stufen in einem Dosierungsvorgang des Einspritzgießvorgangs und

einen Einstellwertspeicher (15) zum Speichern voreingestellter Werte, die durch die Einstellmittel eingestellt sind,

wobei das Steuermittel (14) ferner die Funktion eines Feststellungsmittels zum Feststellen von Maximalwerten der Gegendrücke (P), der Schneckendrehzahlen (V) und der Schneckenschaltpositionen (L) hat, die eingestellt und gespeichert worden sind, und

das Steuermittel (14) ferner die Funktion eines Maßstabsfaktorberechnungsmittels zum Berechnen von Maßstabsfaktoren in bezug auf die Gegendrücke (P), die Schneckendrehzahlen (V) und die Schneckenschaltpositionen (L) hat, um eine Maßstabsumsetzung für graphische Darstellungen in Übereinstimmung mit den entsprechenden Maximalwerten durchführen zu können, und

wobei das Graphikanzeige-Steuermittel (14) betrieben wird, um mit Hilfe des Graphik-Anzeigemittels (20) die Beziehung zwischen den Schneckenschaltpositionen (L) und den Gegendrücken (P) sowie die Beziehung zwischen den Schneckenschaltpositionen (L) und den Schneckendrehzahlen (V) in Übereinstimmung mit den Gegendrücken, den Schneckendrehzahlen und den Schneckenschaltpositionen für die betreffenden Stufen sowie den Maßstabsfaktoren, die diesen entsprechen, in Form graphischer Darstellungen (G1, G2) anzuzeigen, wodurch Einstellfehler leicht erfaßt werden können.

2. Einspritzgießvorrichtung nach Anspruch 1, bei der das Anzeigemittel (20) einen Anzeigebildschirm umfaßt und das Graphikanzeige-Steuermittel (14) die Dosierungsbedingungen in zumindest einem rechtwinkligen Koordinatensystem (G1, G2) anzeigt, das auf dem Anzeigebildschirm dargestellt wird.

3. Einspritzgießvorrichtung nach Anspruch 2, bei der das Maßstabsfaktorberechnungsmittel (14) betreibbar ist zum

Dividieren von Maximallängen betreffender erster Koordinatenachsen eines ersten und eines zweiten rechtwinkligen Koordinatensystems (G1, G2), die durch die Schneckenschaltposition (Ln) der letzten Stufe anzuzeigen sind, um einen ersten bzw. einen zweeiten Maßstabsfaktor zu berechnen,

Dividieren einer Maximallänge einer zweiten Koordinatenachse des ersten Koordinatensystems (G1) durch den festgestellten Maximalwert der Gegendrücke (P), um einen dritten Maßstabsfaktor zu berechnen, und

Dividieren einer Maximallänge einer zweiten Koordinatenachse des zweiten Koordinatensystems (G2) durch den festgestellten Wert der Schneckendrehzahlen (V), um einen vierten Maßstabsfaktor zu berechnen.

4. Einspritzgießvorrichtung nach Anspruch 3, bei der das Graphikanzeige-Steuermittel (14) betreibbar ist zum

Multiplizieren der Schneckenschaltpositionen (L) für jede der betreffenden Stufen mit den ersten und zweiten Maßstabsfaktoren, um Koordinatenpositionen der Schneckenschaltpositionen für jede der betreffenden Stufen auf der betreffenden ersten Achse des ersten bzw. des zweiten Koordinatensystems (G1, G2) zu berechnen,

Multiplizieren der Gegendrücke (P) für jede der betreffenden Stufen mit dem dritten Maßstabsfaktor, um Koordinatenpositionen der Gegendrücke für jede der betreffenden Stufen auf der zweiten Koordinatenachse des ersten Koordinatensystems (G1) zu berechnen, und

Multiplizieren der Schneckendrehzahlen (V) für jede der betreffenden Stufen mit dem vierten Maßstabsfaktor, um die Koordinatenpositionen der Schneckendrehzahlen für jede der betreffenden Stufen auf der zweiten Koordinatenachse des zweiten Koordinatensystems (G2) zu berechnen.

5. Einspritzgießvorrichtung nach Anspruch 4, bei der das Graphikanzeige-Steuermittel (14) betrieben wird zum Bewirken einer graphischen Darstellung derart, daß eine "i"-te Koordinatenposition in dem ersten Koordinatensystem (G1), die durch die Gegendrücke (Pi) für eine "i"-te Stufe bestimmt ist, durch eine Linie mit einer "i+1"-ten Koordinatenposition in dem ersten Koordinatensystem (G1), die durch den Gegendruck und die Schneckenschaltposition (Li) für die "i"-te Stufe bestimmt ist, verbunden wird, und um "i" um 1 zu erhöhen und dies solange fortzusetzen, bis "i" die Anzahl (n) der Schaltstufen übersteigt, wobei "i" anfängich auf "1" gesetzt ist.

6. Einspritzgießvorrichtung nach Anspruch 4 oder 5, bei der das Graphikanzeige-Steuermittel (14) betrieben wird zum Bewirken einer graphischen Darstellung derart, daß eine "i"-te Koordinatenposition in dem zweiten Koordinatensystem (G2), die durch die Schneckendrehzahl (Vi) für eine "i"-te Stufe bestimmt ist, durch eine Linie mit einer "i+1"-ten Koordinatenposition in dem zweiten Koordinatensystem (G2) verbunden wird, die durch die Schneckendrehzahl und die Schneckenschaltposition (Li) für die "i"-te Stufe bestimmt ist, und zum Erhöhen von "i" um 1 und zum Forsetzen dieses Prozesses, bis "i" die eingegebene Anzahl (n) von Schaltstufen übersteigt, wobei "i" anfänglich auf "1" gesetzt ist.

7. Einspritzgießvorrichtung nach Anspruch 3, 4, 5 oder 6, bei der das Anzeigemittel (20) die ersten und zweiten Koordinatensysteme (G1, G2) getrennt voneinander anzeigt.

8. Einspritzgießvorrichtung nach Anspruch 3, 4, 5 oder 6, bei der das Anzeigemittel (20) die ersten und zweiten Koordinatensysteme (G1, G2) einander überlagert anzeigt.

**Revendications**

1. Une machine de moulage par injection comprenant un moyen d'affichage (20), et un moyen de commande d'affichage graphique (14) pour afficher sur ledit moyen d'affichage un graphique d'une variable associée à un procédé de moulage par injection; caractérisée par:

des moyens de positionnement (21) pour fixer le nombre (n) de phases de commutation, et des contre-pressions (P), des vitesses de rotation de la vis (V), et des positions de commutation de vis (L) pour les phases respectives dans un procédé de dosage dudit procédé de moulage par injection;

des moyens de mémoire des valeurs fixées à l'avance (15) pour stocker les valeurs fixées à l'avance déterminées par lesdits moyens de positionnement;

ledit moyen de commande (14) ayant, en outre, la fonction d'un moyen de discrimination pour discriminer les valeurs maximales des contre-pressions (P), des vitesses de rotation de la vis (V), et des positions de commutation de vis (L) qui ont été fixées et stockées; et

ledit moyen de commande (14) ayant, en outre, la fonction d'un moyen de calculer du facteur d'échelle, pour calculer des facteurs d'échelle concernant les contre-pressions (P), les vitesses de rotation de la vis (V), et les positions de commutation de vis (L) pour produire la conversion des échelles en des graphiques conformément aux valeurs maximales correspondantes; et dans laquelle

lesdits moyens de commande d'affichage graphique (14) sont actionnés pour afficher sur ledit moyen d'affichage (20), sous la forme de graphiques (G1, G2), la relation entre les positions de commutation de la vis (L) et les contrepressions (P) et la relation entre les positions de commutation de la vis (L) et les vitesses de rotation de la vis (V) conformément aux contre-pressions, aux vitesses de rotation de la vis, et aux positions de commutation de la vis pour les phases respectives, et les facteurs d'échelle correspondant à celles-ci, ce qui permet de détecter rapidement des erreurs de sélection.

2. Une machine de moulage par injection selon la revendication 1, dans laquelle ledit moyen d'affichage (20) comprend un écran d'affichage, et ledit moyen de commande d'affichage graphique (14) affiche les conditions de dosage sur au moins un système de coordonnées orthogonal (G1, G2) affichées sur ledit écran d'affichage.

3. Une machine de moulage par injection selon la revendication 2, dans laquelle on actionne ledit moyen pour calculer le facteur d'échelle (14) pour:

diviser des longueurs maximales de premiers axes de coordonnées respectifs des premier et second systèmes de coordonnées d'orthogonales (G1, G2) destinées à être affichées par la position de commutation de la vis (Ln) de la phase finale pour calculer les premier et second facteurs d'échelle, respectivement,

diviser une longueur maximale d'un deuxième axe de coordonnées du premier système de coordonnée (G1) par la valeur maximale discriminée des contre-pressions (P) pour calculer un troisième facteur d'échelle, et pour

diviser une longueur maximale d'un second axe de coordonnées du second système de coordonnées (G2) par la valeur maximale discriminée des vitesses de rotation de la vis (V) pour calculer un quatrième facteur d'échelle.

4. Une machine de moulage par injection selon la revendication 3, dans laquelle lesdits moyens de commande d'affichage graphique (14) sont actionnés pour:

multiplier les positions de commutations de vis (L) pour chacune des phases respectives avec les premier et second facteurs d'échelle pour calculer les positions de coordonnées des positions de commutation de la vis pour chacune des phases respectives sur les premiers axes respectifs des premier et second système de coordonnées (G1, G2) respectivement,

multiplier les contre-pressions (P) pour chacune des phases respectives avec le troisième facteur d'échelle pour calculer les positions des coordonnées des contre-pressions pour chacune des phases respectives sur le second axe de coordonnée du premier système de coordonnée (G1), et

multiplier les vitesses de rotation de vis (V) pour chacune des phases respectives avec le quatrième facteur d'échelle pour calculer des positions de coordonnée des vitesses de rotation de la vis pour chacune des phases respectives sur le second axe de coordonnées du second système de coordonnée (G2).

5. Une machine de moulage par injection selon la revendication 4, dans laquelle lesdits moyens de commande d'affichage graphique (14) sont actionnés pour produire un affichage graphique de façon à ce qu'une position de coordonnée "i" $^{ième}$ sur la premier système de coordonnée (G1) déterminée par la contre-pression (Pi) pour une "i"$^{ième}$ phase est relié par une ligne à une position de coordonnée "i+1"$^{ième}$ sur le premier système de coordonnée (G1) déterminé par le contre-pression et la position de commutation de la vis (Li) pour la "i"$^{ième}$ phase, et pour incrémenter "i" par un et pour continuer jusqu'à ce que "i" dépasse le nombre (n) des phases de commutations, "i" étant initialement positionné à "1".

6. Une machine de moulage par injection selon l'une des revendications 4 ou 5, dans laquelle lesdits moyens de commande d'affichage graphique (14) sont actionnés pour produire un affichage graphique de sorte qu'une "i" $^{ème}$ position de coordonnée sur le second système de coordonnée (G2) déterminée par la vitesse de rotation de la vis (Vi) pour une "i"$^{ième}$ phase est relié par une ligne à une position de coordonnée "i+1"$^{ième}$ sur le second système de coordonnée (G2) déterminé par la vitesse de rotation de la vis et la position de commutation de la vis (Li) pour la "i"$^{ième}$ phase, et pour incrémenter "i" par un et pour continuer jusqu'à ce que "i" dépasse le nombre entre (n) des phases de commutations, "i" étant initialement positionné à "1".

7. Une machine de moulage par injection selon l'une des revendications 3, 4, 5 ou 6, dans laquelle ledit moyen d'affichage (20) affiche les premier et second systèmes de coordonnées (G1, G2) séparément l'un de l'autre.

8. Une machine de moulage par injection selon l'une des revendications 3, 4, 5 ou 6, dans laquelle ledit moyen d'affichage (20) affiche les premier et second systèmes de coordonnées (G1, G2) superposés l'un de l'autre.

**EP 0 216 939 B1**

# FIG.1

# FIG.2

**METERING SETTING**

| n SWITCHING STAGE | BACK PRESSURE | ROTATING SPEED | SWITCHING POINT |
|---|---|---|---|
| METERING 1 | P1 | V1 | L1 |
| METERING 2 | P2 | V2 | L2 |
| METERING 3 | P3 | V3 | L3 |
| METERING 4 | P4 | V4 | L4 |
| ⋮ | ⋮ | ⋮ | ⋮ |
| METERING n | Pn | Vn | Ln |

| SCREW POSITION | L0 |
|---|---|
| SCREW ROTATING SPEED | V0 |
| BACK PRESSURE | P0 |
| METERING TIME | T0 |

| SCREW BACK | Ln |
|---|---|
| SUCK BACK | Ls |
| COOLING TIME | Tr |

20

G1

BACK PRESSURE
P

SCREW POSITION

G2

ROTATING SPEED
V

SCREW POSITION

22-1  22-2  22-3  22-4  22-5  22-6  22-7  22-8  22-9  22-10

EP 0 216 939 B1

# FIG.3A

START

S1 — Ln = 0 — Y → END

N

S2 — i ← 1

S3 — R(P) ← P1

S4 — R(P):Pi — >

≦

S5 — R(P) ← Pi

S6 — i ← i+1

S7 — i : n — >

≦

S8 — Xc ← $\dfrac{Xm}{Ln}$

S9 — R(P)=0 ? — Y

N

S11 — Yc ← $\dfrac{Ym}{R(P)}$

S10 — Yc ← 1

J1

# FIG.3B

J1

S12 — ( 0 ,( Yc·P1))
−((Xc·L1),(Yc·P1))

S13 — i ← 2

S14 — ((Xc· Li−1),( Yc·Pi−1))
−((Xc·Li−1),(Yc·Pi))

S15 — ((Xc·Li−1),(Yc·Pi))
−((Xc·Li),(Yc·Pi))

S16 — i ← i+1

S17 — i : n — >

≦

S18 — ((Xc·Ln),(Yc·Pn))
−((Xc·Ln), 0 )

J2

# FIG.3

| FIG.3A | FIG.3B | FIG.3C | FIG.3D |
|--------|--------|--------|--------|

# FIG.3C

(J2)

$i \leftarrow 1$ — S19

$R(V) \leftarrow V1$ — S20

$R(V) : Vi$ — S21

$R(V) \leftarrow Vi$ — S22

$i \leftarrow i + 1$ — S23

$i : n$ — S24

$Xc \leftarrow \dfrac{X'm}{Ln}$ — S25

$Yc \leftarrow \dfrac{X'm}{R(V)}$ — S26

(J3)

# FIG.3D

(J3)

$(0,(Yc \cdot V1))$
$-((Xc \cdot L1),(Yc \cdot V1))$ — S27

$i \leftarrow 2$ — S28

$((Xc \cdot Li-1),(Yc \cdot Vi-1))$
$-((Xc \cdot Li-1),(Yc \cdot Vi))$ — S29

$((Xc \cdot Li-1),(Yc \cdot Vi))$
$-((Xc \cdot Li),(Yc \cdot Vi))$ — S30

$i \leftarrow i+1$ — S31

$i : n$ — S32

$((Xc \cdot Ln),(Yc \cdot Vn))$
$-((Xc \cdot Ln), 0 )$ — S33

END